(19) Europäisches Patentamt
European Patent Office
Office européen des brevets

(11) Veröffentlichungsnummer : **0 116 348 B2**

(12) **NEUE EUROPÄISCHE PATENTSCHRIFT**

(45) Veröffentlichungstag der neuen Patentschrift : **03.11.93 Patentblatt 93/44**

(51) Int. Cl.$^5$ : **C07F 5/02,** C23F 11/00

(21) Anmeldenummer : **84101088.7**

(22) Anmeldetag : **03.02.84**

# (54) Reaktionsprodukte aus Borsäure, Diethanolamin und Monoethanolaminen und deren Verwendung als Korrosionsschutzmittel.

(30) Priorität : **08.02.83 DE 3304164**

(43) Veröffentlichungstag der Anmeldung : **22.08.84 Patentblatt 84/34**

(45) Bekanntmachung des Hinweises auf die Patenterteilung : **27.05.87 Patentblatt 87/22**

(45) Bekanntmachung des Hinweises auf die Entscheidung über den Einspruch : **03.11.93 Patentblatt 93/44**

(84) Benannte Vertragsstaaten : **BE DE GB IT NL SE**

(56) Entgegenhaltungen :
**EP-B- 15 442**
**EP-B- 29 529**
**DE-A- 2 007 229**

(56) Entgegenhaltungen :
**DE-B- 1 620 447**
**DE-B- 1 811 060**
**DE-C- 2 840 112**
**FR-A- 1 340 167**
**FR-A- 1 546 339**
**FR-A- 1 557 789**
**GB-A- 2 004 911**
**US-A- 4 176 076**
**Ullmanns Encyclop. d.techn.Chemie, Bd.20, S.560**

(73) Patentinhaber : **HOECHST AKTIENGESELLSCHAFT**
**D-65926 Frankfurt (DE)**

(72) Erfinder : **Ritschel, Werner, Dr.**
**Gartenstrasse 17**
**D-6238 Hofheim am Taunus (DE)**
Erfinder : **Lorke, Horst**
**Wachenheimer Strasse 14**
**D-6237 Liederbach (DE)**

**EP 0 116 348 B2**

## Beschreibung

Die Standzeiten von Metallbearbeitungsflüssigkeiten hängen wesentlich ab von ihrer Stabilität gegenüber Mikroorganismen. Einen nahezu idealen Nährboden für Mikroorganismen bot das früher als Korrosionsschutzkomponente eingesetzte Natriumnitrit, dessen Verwendung aus toxikologischen und ökologischen Gründen heute allerdings nicht mehr vertretbar ist. Aber auch die zahlreichen, als Ersatz für Nitrit entwickelten synthetischen Korrosionsschutzmittel, meist Carbonsäuren oaer Phosphonsäuren, bieten in der Regel nur unzureichend Schutz gegen Bakterien- und Pilzbefall.

Der Einsatz von herkömmlichen Mikrobioziden wird in Metallbearbeitungsflüssigkeiten begrenzt einmal aus dermatologischen Gründen, da ein Hautkontakt unvermeidbar ist, zum anderen werden alle diejenigen Verbindungen ausgeschlossen, die mit den Korrosionsschutzkomponenten aufgrund ihrer chemischen Konstitution in Wechselwirkung treten. So können z. B. die als Mikrobiozide bekannten quaternären Ammoniumverbindungen in Gegenwart von Carbonsäuren nicht verwendet werden, da sie infolge Neutralsalzbildung unwirksam werden.

In der US-A-2 999 064 werden Mischungen von Borsäure, Alkanolaminen und ungesättigten Fettsäuren als wasserlösliche Schneidflüssigkeiten mit mikrobioziden Eigenschaften beschrieben. Diese Mischungen weisen jedoch neben einer unzureichenden Korrosionsschutzwirkung den Nachteil des Schäumens auf und die besitzen eine nicht ausreichende fungizide Wirksamkeit.

Mischungen aus Borsäure und Alkanolaminen zur Verwendung als Korrosionsschutzmittel sind auch in der FR-A-1 557 789 beschrieben. Diese Produkte stellen Salze dar, das heißt Neutralisationsprodukte der Borsäure mit den Alkanolaminen.

Auch die in der DE-C-1 620 447 beschriebenen Piperazinderivate, die durch Kondensation von Aminoalkoholen. Borsäure und Carbonsäuren bei hohen Temperaturen gebildet werden, können in der Anwendung als Korrosionsschutz-, Kühl-, Schmier- und Schneidmittel den Befall von Pilzen, insbesondere Trichoderma, nur unzureichend verhindern. Gleichermaßen bewirken Korrosionsschutzmittel aus Borsäure. Diethanolamin und Aryl- bzw. Alkylsulfonamidocarbonsäuren (DE-C-28 40 112) zwar gute bakterizide, aber unzureichende fungizide Effekte.

Daneben ist bekannt, daß am Stickstoff substituierte Ethanolamine verschiedene Kühl- und Schneidflüssigkeiten wirkungsvoll konservieren können (E. O. Bennet, J. Am. Soc. Lubr. Eng. 35 (1979), 137-144), doch werden in der zitierten Literatur keine Angaben über die chemische Natur der konservierten Flüssigkeiten gemacht. An gleicher Stelle wird auch darauf hingewiesen, daß an einigen Kühlmitteln schlechte Ergebnisse erzielt wurden, was möglicherweise auf eine ungünstige Wechselwirkung mit den üblicherweise in Schneidflüssigkeiten eingesetzten Chemikalien zurückzuführen ist.

Es wurde nun gefunden, daß Kondensationsprodukte aus Borsäure, Diethanolamin und einem Monoethanolamin sowie Mischungen dieser Kondensationsprodukte mit Aryl- oder Alkylsulfonamidocarbonsäuren sowohl ausgezeichnete Korrosionsschutzwirkungen aufweisen, wie auch bakterizide und fungizide Effekte bewirken, die über die additive Wirkung der Einzelkomponenten hinausgehen.

Gegenstand der Erfindung sind neue Reaktionsprodukte erhalten durch Umsetzung von Borsäure. Diethanolamin und einem Monoethanolamin der Formel R-NH-$CH_2$CHXOH, wobei R $C_1$-$C_{10}$-Alkyl und X=H oder $CH_3$ bedeutet, im Molverhältnis 1 : 0.5 : 2.5 bis 1 : 2.5 : 0.5, vorzugsweise in einem Molverhältnis von 1: 1.5 : 1.5 bis 1 : 2 : 1 bei Temperaturen von 70 bis 130°C. Diese Reaktionsprodukte werden erhalten durch Erhitzen der drei Komponenten in Abwesenheit eines Lösungsmittels auf 70 bis 130 °C, vorzugsweise 80 bis 100 °C.

Die so hergestellten Reaktionsprodukte werden dann mit Wasser verdünnt und werden in dieser Form als Korrosionsschutzmittel für Eisenmetalle verwendet. Sie besitzen nicht nur eine gute bakterizide Wirkung neben der Wirkung als Korrosionsschutzmittel, sondern zeichnen sich darüberhinaus auch durch eine gute fungizide Wirkung aus.

Die wässrige Lösung der oben beschriebenen Reaktionsprodukte kann zusätzlich auch noch weitere übliche Korrosionsschutzmittel enthalten, so z. Bsp. vor allem Arylsulfonamidocarbonsäuren und Alkylsulfonamidocarbonsäuren der Formel

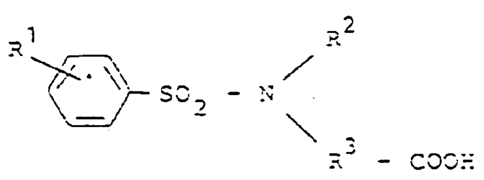

und

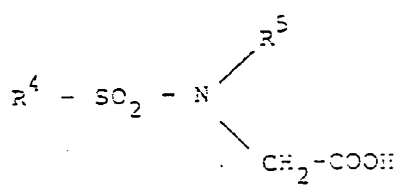

wobei $R^1$ Wasserstoff, Methyl oder Ethyl, $R^2$ Wasserstoff, Methyl, Ethyl, Cyanoethyl oder Hydroxymethyl, $R^3$ $C_4$-$C_6$-Alkylen, $R^4$ Alkyl oder Cycloalkyl mit 12-22 C-Atomen und $R^5$ Wasserstoff oder die Gruppe $-CH_2COOH$ bedeuten.

Die Herstellung der Arylsulfonamidocarbonsäuren ist in der DE-C-1 298 672 beschrieben. Bevorzugte Beispiele solcher Verbindungen sind ε-[Benzolsulfonyl-N-methylamino]-n-capronsäure und ε[Tolu-olsulfonyl-N-methylamino]-n-capronsäure.

Die Herstellung der Alkyl- oder Cycloalkylsulfonamidocarbonsäuren ist z. B. in DE-C-900 041 beschrieben. Sie erfolgt durch Sulfochlorierung von gesattigten Konlenwasserstoffen mit 12-22 C- Atomen, die im wesentlichen aus n-Paraffinen bestenen, die jedoch auch verzweigte und/oder cyclische Anteile enthalten können und einen Siedebereich von etwa 200 bis 350 °C aufweisen, nachfolgender Umsetzung mit Ammoniak und anschließender Kondensation mit Chloressigsäure. Diese Produkte enthalten wegen der unvollständig verlaufenden Sulfochlorierung noch Anteile an nicht umgesetztem Paraffin und/oder Chlorparaffin ; sie besitzen im allgemeinen eine Säurezahl im Bereich von etwa 40 bis 60. Der Anteil der Aryl- oder Alkylsulfonamidocarbonsäuren beträgt im allgemeinen etwa 10 bis 50 Gew.-% vorzugsweise 10 bis 30 Gew.-%. Der an 100 % fehlende Rest ist das Borsäureaktionsprodukt. Diese Angaben beziehen sich im Falle der Verwendung von Alkyl- oder Cycloalkylsulfonamidocarbonsäuren auf die reinen Säuren ; der diese Sulfonamidocarbonsäuren begleitende Anteil an nicht umgesetzten Kohlenwasserstoffen oder Chlorparaffin wird nach dem Mischen mit den Umsetzungsprodukten von Borsäure, Diethanolamin und Monoethanolamin durch Phasentrennung abgeschieden. Zur Beschleunigung der Phasentrennung läßt man zweckmäßig bei erhöhter Temperatur, bevorzugt bei 50 bis 70 °C absitzen.

Die Reaktionsprodukte gemäß der Erfindung sind klar wasserlösliche bzw. leicht emulgierbare Produkte, die im allgemeinen in Form viskoser Flüssigkeiten vorliegen. Diese Produkte können mit besonderem Vorteil als Korrosionsschutzmittel in wäßrigen Kühlschmiermitteln, insbesondere Bohr,Schneid- und Walzflüssigkeiten eingesetzt werden. Zur Bereitung dieser wäßrigen Kühlschmiermittel werden die Reaktionsprodukte in die erforderliche Menge Wasser eingerührt. Die Anwendungskonzentration der Borsäurereaktionsprodukte allein oder deren Gemisch mit Aryl- bzw. Alkylsulfonamidocarbonsäuren in den wäßrigen Bohr-, Schneid- und Walzflüssigkeiten beträgt im allgemeinen etwa 0.5 bis 10 Gew.-%, vorzugsweise 2 bis 5 Gew.-%. Erforderlichenfalls können auch noch weitere, für diesen Anwendungszweck bekannte Wirkstoffe zugegeben werden. Die wäßrigen Korrosionsschutzmittel stellen schaumarme, klare wäßrige Lösungen bis emulsionsartige Flüssigkeiten dar.

Beispiel 1

61.8 g (1 mol) Borsäure werden mit 210 g (2 mol) Diethanolamin und 117 g (1 mol) Butylethanolamin auf 90 °C erhitzt, bis eine klare Lösung entsteht. Man erhält ca. 385 g einer viskosen, in Wasser klar löslichen Flüssigkeit, die als Korrosionsschutzmittel verwendet werden kann.

Beispiel 2

Aus 61.8 g (1 mol) Borsäure, 158 g (1.5 mol) Diethanolamin und 176 g (1.5 mol) Butylethanolamin erhält man analog Beispiel 1 ca. 390 g viskose Flüssigkeit.

Beispiel 3

Aus 61.8 g (1 mol) Borsäure, 210 g (2 mol) Diethanolamin und 131 g (1 mol) Pentylethanolamin erhält man analog Beispiel 1 ca. 400 g einer viskosen Flüssigkeit.

Beispiel 4

Aus 61.8 g (1 mol) Borsäure, 158 g (1.5 mol) Dietnanolamin und 197 g (1.5 mol) Pentylethanolamin erhält man ca. 410 g viskose Flüssigkeit.

Beispiel 5

Zu 160 g einer Mischung aus Beispiel 1 werden bei 80 °C 33 g ε-(Benzolsulfonyl-N-methyl-amino)-n-capronsaüre zugemischt. Die erhaltene klare Losüng findet als Korrosionsschutzmittel Verwendung.

Beispiel 6

Zu 160 g einer Mischung aus Beispiel 1 werden bei 60 °C 55 g einer Alkylsulfonamidoessigsaure gegeben, hergestellt nach DE-C-900 041. Beispiel 1, aber aus einem Kohlenwasserstoff, der aus unverzweigten Paraffinen, mit 14-17 Konienstoffatomen besteht. Die sich aus der Mischung bei 60 °C nach 90 Minuten abgeschiedene Ölphase wird abgetrennt. Man erhält ca. 190 g einer dunklen Lösung, die als Korrosionsschutzmittel Verwendung finden kann.

Als Vergleichsproben wurden folgende Produkte herangezogen :

Vergleichsprodukt A

61.8 g (1 mol) Borsäure wurden mit 315 g (3 mol) Diethanolamin auf 90 °C erhitzt, bis eine klare Lösung entstand.

Vergleichsprodukt B

Zu 160 g einer Lösung vom Vergleichsprodukt A wurden bei 80 °C 33 g ε-(Benzolsulfonyl-N-methyl-amino)-n-capronsäure zugemischt, bis eine klare Lösung entstand.

Vergleichsprodukt C

Zu 160 g einer Lösung vom Vergleichsprodukt A wurden analog Beispiel 6 55 g einer paraffinhaltigen Alkylsulfonamidoessigsäure zugegeben, worauf die abgeschiedene Ölphase abgetrennt wurde.

Die Korrosionsschutzeigenschaften der Produkte wurde nach DIN 51 360, Blatt 2. untersucht und vergleichend beurteilt. Für die Prüfungen wurden wäßrige Zubereitungen mit einem Wirkstoffgehalt von 1.5 %, 2.0 % und 3 % verwendet.

Zur Beurteilung der mikrobioziden Wirksamkeit wurde die Reduzierung der Keimzahl bei verschiedenen Testorganismen durch 3 %-ige wäßrige Lösungen der Proben geprüft.

Die Untersuchungsergebnisse sind in der nachfolgenden Tabelle zusammengestellt.

(Siehe Tabelle Seite 5 f.)

Tabelle

| | Korrosionsschutz-Filterpapiertest DIN 51 360/2 | | | Konservierungsbelastungsproben 3 %ige wäßrige Lösung Ausgangskeimzahl $10^6$ Keimzahl nach 24 Stunden | | | | |
|---|---|---|---|---|---|---|---|---|
| | 1,5 | 2,0 | 3,0 | 1 | 2 | 3 | 4 | 5 |
| Vergleichsprodukt A | 4 | 3 | 0 | $10^3$ | < 100 | $10^6$ | $10^6$ | $10^6$ |
| Vergleichsprodukt B | 1 | 0 | 0 | $10^3$ | < 100 | $10^6$ | $10^6$ | $10^6$ |
| Vergleichsprodukt C | 0 | 0 | 0 | $10^3$ | < 100 | $10^6$ | $10^6$ | $10^6$ |
| Beispiel 1 | 4 | 2 | 0 | < 100 | < 100 | < 100 | < 100 | < 100 |
| Beispiel 2 | 4 | 2 | 0 | < 100 | < 100 | < 100 | < 100 | < 100 |
| Beispiel 3 | 4 | 3 | 0 | < 100 | < 100 | < 100 | < 100 | < 100 |
| Beispiel 4 | 3 | 2 | 0 | < 100 | < 100 | < 100 | < 100 | < 100 |
| Beispiel 5 | 0 | 0 | 0 | < 100 | < 100 | < 100 | < 100 | < 100 |
| Beispiel 6 | 0 | 0 | 0 | < 100 | < 100 | < 100 | < 100 | < 100 |

0 keine Korrosion
1 Spuren Korrosion
2 leichte Korrosion
3 mäßige Korrosion
4 starke Korrosion

1 Escherichia coli
2 Pseudomonas aeruginosa
3 Aspergillus niger
4 Candida albicans
5 Trichoderma

## Patentansprüche

1. Reaktionsprodukte erhalten durch Umsetzung von Borsäure, Diethanolamin und einem Monoethanolamin der Formel R-NH-$CH_2CHXOH$, wobei R $C_1$-$C_{10}$-Alkyl und X=H oder $CH_3$ bedeutet, im Molverhältnis 1 : 0.5: 2.5 bis 1 : 2.5: 0.5 bei Temperaturen von 70 bis 130°C.

2. Korrosionsschutzmittel in Form einer wäßrigen Lösung, enthaltend ein Reaktionsprodukt nach Anspruch 1.

3. Korrosionsschutzmittel in Form einer wäßrigen Lösung, enthaltend ein Reaktionsprodukt nach Anspruch 1 sowie eine Arylsulfonamidocarbonsäure der Formel

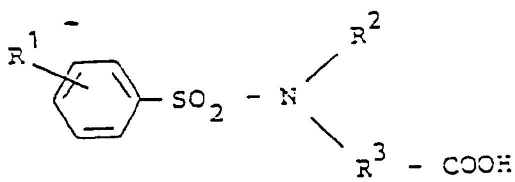

oder eine Alkylsulfonamidocarbonsäure der Formel

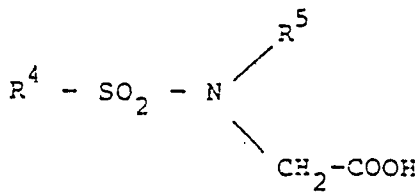

wobei $R^1$ Wasserstoff, Methyl oder Ethyl, $R^2$ Wasserstoff, Methyl, Ethyl, Cyanoethyl oder Hydroxymethyl, $R^3$ $C_4$-$C_6$-Alkylen, $R^4$ Alkyl oder Cycloalkyl mit 12-22 C-Atomen und R5 Wasserstoff oder die Gruppe -$CH_2COOH$ bedeuten.

4. Korrosionsschutzmittel in Form einer wäßrigen Lösung, enthaltend insgesamt 0,5-10 Gew.-% eines Reaktionsprodukts nach Anspruch 1 allein oder zusammen mit einer Arylsulfonamidocarbonsäure oder Alkylsulfonamidocarbonsäure.

## Claims

1. A reaction product obtained by reaction of boric acid, diethanolamine and a monoethanolamine of the formula R-NH-$CH_2CHXOH$, where R is $C_1$-$C_{10}$-alkyl and X is H or $CH_3$, in a molar ratio of from 1 : 0.5 : 2.5 to 1: 2.5 : 0.5 at temperatures of from 70 to 130°C.

2. A corrosion inhibitor in the form of an aqueous solution containing a reaction product as claimed in claim 1.

3. A corrosion inhibitor in the form of an aqueous solution containing a reaction product as claimed in claim 1 and an arylsulfonamidocarboxylic acid of the formula

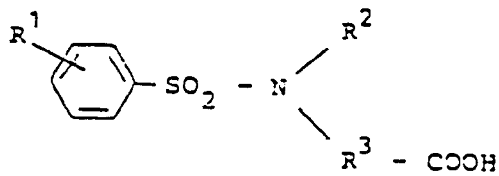

or an alkylsulfonamidocarboxylic acid of the formula

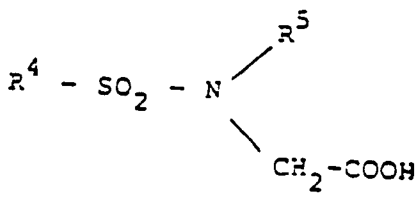

where $R^1$ is hydrogen, methyl or ethyl, $R^2$ is hydrogen, methyl, ethyl, cyanoethyl or hydroxymethyl, $R^3$ is $C_4$-$C_6$-alkylene, $R^4$ is alkyl or cycloalkyl having 12-22 carbon atoms and $R^5$ is hydrogen or the group $-CH_2COOH$.

4. A corrosion inhibitor in the form of an aqueous solution containing a total of from 0.5-10 % by weight of a reaction product as claimed in claim 1 either alone or together with an arylsulfonamidocarboxylic acid or an alkylsulfonamidocarboxylic acid.

## Revendications

1. Produits obtenus par réaction d'acide borique, de diéthanolamine et d'une monoéthanolamine de formule R--NH--$CH_2CHXOH$, R désignant un alkyle en $C_1$-$C_{10}$ et X l'hydrogène ou le groupe $CH_3$, dans des proportions molaires respectives 1 : 0,5 : 2,5 à 1 : 2,5 : 0,5,à des températures comprises entre 70 et 130°C.

2. Agents de protection contre la corrosion en solutions aqueuses contenant un produit de réaction de la revendication 1.

3. Agents de protection contre la corrosion en solutions aqueuses contenant un produit de réaction de la revendication 1 avec un acide arylsulfonamidocarboxylique de formule

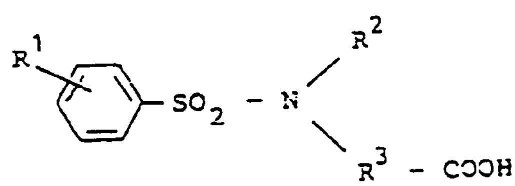

ou un acide alkylsulfonamidocarboxylique de formule

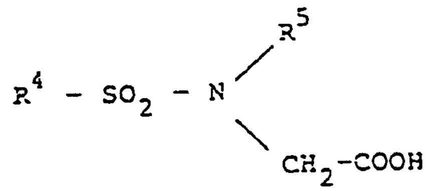

formules dans lesquelles $R_1$ désigne l'hydrogène ou le groupe méthyle ou éthyle, $R_2$ l'hydrogène ou un groupe méthyle, éthyle, cyanoéthyle ou hydroxyméthyle, $R_3$ un alkylène en $C_4$-$C_6$, $R_4$ un alkyle ou un cycloalkyle ayant de 12 à 22 atomes de carbone et $R_5$ l'hydrogène ou le groupe $--CH_2COOH$.

**4.** Agents de protection contre la corrosion en solutions aqueuses contenant au total de 0,5 à 10 % en poids d'un produit de réaction de la revendication 1, seul ou avec un acide arylsulfonamidocarboxylique ou alkylsulfonamidocarboxylique.